# EUROPEAN PATENT SPECIFICATION

(11) **EP 2 784 859 B1**
(45) Date of publication and mention of the grant of the patent: **07.06.2017**
(21) Application number: 11878921.3
(22) Date of filing: 28.12.2011
(51) Int. Cl.: H01M 4/36, H01M 4/38, H01M 4/587, H01M 10/052, H01M 4/04

(54) **NANO-SULPHUR COMPOSITE ANODE MATERIAL FOR RARE EARTH LITHIUM SULPHUR BATTERY AND METHOD FOR PREPARING SAME.**
ZUSAMMENGESETZTES NANOSCHWEFEL-ANODENMATERIAL FÜR EINE SELTENERD-LITHIUM-SCHWEFELBATTERIE UND HERSTELLUNGSVERFAHREN DAFÜR
MATÉRIAU À ANODE COMPOSITE DE NANO-SOUFRE POUR UNE BATTERIE AU LITHIUM-SOUFRE DE TERRES RARES ET PROCÉDÉ DE PRÉPARATION CORRESPONDANT

(43) Date of publication of application: 01.10.2014
(73) Proprietor: Chung, Winston, Hong Kong (CN)
(72) Inventor: Chung, Winston, Hong Kong (CN)
(74) Representative: ProI European Patent Attorneys
(86) International application number: PCT/CN2011/084822
(87) International publication number: WO 2013/097116

(56) References cited:
- WO-A1-2013/097116
- CN-A- 101 562 244
- CN-A- 101 562 244
- CN-A- 101 577 323
- CN-A- 101 719 545
- CN-A- 102 522 530
- CN-C- 100 355 123
- US-A1- 2002 039 684
- US-A1- 2011 206 992
- ZHENG W ET AL: "Novel nanosized adsorbing sulfur composite cathode materials for the advanced secondary lithium batteries", ELECTROCHIMICA ACTA, ELSEVIER SCIENCE PUBLISHERS, BARKING, GB, vol. 51, no. 7, 5 January 2006 (2006-01-05), pages 1330-1335, XP028027836, ISSN: 0013-4686, DOI: 10.1016/J.ELECTACTA.2005.06.021 [retrieved on 2006-01-05]
- Anonymous: "Company Overview - Winston Global Energy Holdings Limited", Winston Battery Limited , 27 November 2011 (2011-11-27), XP002730063, Retrieved from the Internet: URL:http://web.archive.org/web/20111127095 838/http://en.winston-battery.com/index.ph p/about-us [retrieved on 2014-09-23]

## Description

### Background of the Present Invention

### Field of Invention

The present invention relates to an anode material for lithium battery, and more particularly to a nano-sulfur composite anode material for rare earth lithium-sulfur battery and its preparation method thereof, which is in the field of preparation of rare earth lithium battery material.

### Description of Related Arts

Lithium-ion battery is classified as the "green" high power battery of the new generation which has superior performance and is the major subject of development in the hi-tech industry. Lithium-ion battery has features of high voltage, high capacity, low depletion, no memory effect, no known pollution effect, compact size, low internal resistance, low self-discharge and high cycle life. At present, lithium-ion battery is widely used in cellular phone, notebook computer, video camera, digital camera and its used has spread from daily household products to electric vehicles and military area. The major components of lithium-ion battery include electrolyte, separation material, anode and cathode materials. The percentage of anode material is relatively high (the mass ratio of anode material is 3:1 ∼ 4∼1) because the performance of the anode material can directly affect the overall performance of the lithium-ion battery. In other words, the cost of anode material is the determining factor on the cost of the battery.

At present, the common anode materials of lithium-ion battery are lithium iron phosphate, lithium manganese or ternary material such as lithium nickel manganese material. These types of materials has the problem of insufficient power which fails to meet the need of the present development such as the requirement in the fast developing electric vehicle industry. CN101562244 and Zheng at all, in Electrochimica Acta 51 (2006) 1330-1335 disclose lithium sulfur batteries having lithium sulfur anode composites according to the preamble of claim 1. CN101719545 discloses addition of catalytic metal oxides, such as yttriium oxide to lithium-sulfur batteries.

### Summary of the Present Invention

An object of the present invention is to provide a solution to the above technical problems and to provide a high energy density, long cycle life, environmental friendly and low cost anode material for rare earth lithium-sulfur battery.

Additional advantages and features of the invention will become apparent from the description which follows, and may be realized by means of the instrumentalities and combinations particular point out in the appended claims.

According to the present invention, the foregoing and other objects and advantages are attained by a nano-sulfur composite anode material for rare earth lithium-sulfur battery and its preparation method thereof.

The first technical problem is solved by the provision of the followings:

The nano-sulfur composite anode material for rare earth lithium-sulfur battery according to the preferred embodiment of the present invention has a composition by weight ratio as follows:
carbon nanotube 1∼2
sublimed sulfur 5
rare earth yttrium oxide 0.67∼0.78

The following is further provided to solve the first technical problem mentioned above.

The carbon nanotube is a multiwalled carbon nanotube.

The second technical problem is solved by the provision of the followings:

A preparation method of nano-sulfur composite anode material for rare earth lithium-sulfur battery according to the preferred embodiment of the present invention comprises the steps of:
(1) obtaining a carbon nanotube and a sublimed sulfur by weight ratio, where a weight ratio of the carbon nanotube is 1∼2 and a weight ratio of the sublimed sulfur is 5;
(2) adding ethanol with concentration of at least 65% to the carbon nanotube and the sublimed sulfur from step (1), where a weight ratio of the nanotube and the sublimed sulfur to the ethanol is 2:1, then milling for at least 10 hours to obtain an intermediate mixture;
(3) drying the intermediate mixture from step (2) at 90∼100°C under a protective gas flow of N₂ for 8∼24 hours to form a dried intermediate mixture;
(4) first-stage burning the dried intermediate mixture from step (3) under a negative pressure condition of -0.1∼-0.5 atmosphere at 200°C∼300°C for at least 5 hours to obtain a molten sulfur coated carbon nanotube material;
(5) adding the molten sulfur coated carbon nanotube material from step (4) into ethanol with concentration of at least 65% by volume in which a weight ratio of the molten sulfur coated carbon nanotube material to ethanol is 2:1, and grinding by high speed grinding machine to obtain an intermediate carbon nanotube material having a particle size of 1 micron or less;
(6) drying the intermediate carbon nanotube material from step (5) at 90∼100°C under a protective gas flow of N₂ for 8∼24 hours to obtain a dried intermediate carbon nanotube material;
(7) second-stage burning the dried intermediate carbon nanotube material from step (6) at 300°C∼400°C in flowing Argon gas environment for at least 5 hours to obtain a carbon nanotube-sulfur composite material; and
(8) adding rare earth yittrium oxide (10%) to the carbon nanotube-sulfur composite material from step (7), where a percentage weight of the carbon nanotube-sulfur composite material and the rare earth yttrium oxide is 9:1, then processing by jet milling and grading to obtain the nano-sulfur composite anode material which has a particle size of 1 micron or less.

Compared to conventional arts, the advantageous effect of the present invention are as follows:
The nano-sulfur composite anode material for rare earth lithium-sulfur battery according to the present invention utilizes calcination of carbon nanotube and sublimes sulfur. Under high temperature and vacuum conditions, the molten sulfur is sucked into the carbon nanotube by capillary action. Then, further increase in temperature will result in removal of the excess sulfur, and a final product of carbon nanotube (with sulfur) is obtained, which is the nano-sulfur composite anode material. The final product of anode material has high electron and ion conductivity and high capacity which improve the cycling ability of the sulfur and lithium sulfur in aqueous electrolytes. The preparation method is simple and can be used for mass production, thereby suitable for anode material for lithium-sulfur battery. Because (elemental) sulfur has poor conductivity which contributes to the unstable factor of lithium-sulfur in aqueous electrolyte, therefore it fails to provide high performance in aqueous electrolyte. By means of the preparation method of the present invention, the nano-sulfur composite anode material has a particle size <1 micron, a high capacity which is greater than 1000mAh/g, and a long cycle life (>1000 times). The preparation method has the advantages of simple, low cost and high performance, thereby suitable for industrial production. The rare earth lithium-sulfur battery with the nano-sulfur composite anode material has the advantageous features of high energy density, high cycle performance, environmental friendly and low cost.

Still further objects and advantages will become apparent from a consideration of the ensuing description and drawings.

These and other objectives, features, and advantages of the present invention will become apparent from the following detailed description, the accompanying drawings, and the appended claims.

### Detailed Description of the Preferred Embodiment

The present invention is further described in the following exemplary embodiments according to the preferred embodiment of the present invention.

### Exemplary Embodiment 1

A nano-sulfur composite anode material for rare earth lithium-sulfur battery according to the preferred embodiment of the present invention which has a composition by weight ratio of the followings:
multiwalled carbon nantube 1
sublimed sulfur 5
rare earth yttrium oxide 0.67

A preparation method of nano-sulfur composite anode material for rare earth lithium-sulfur battery according to the preferred embodiment of the present invention comprises the steps of:
(1) obtaining a carbon nanotube and a sublimed sulfur by weight ratio, where a weight ratio of the carbon nanotube is 1 and a weight ratio of the sublimed sulfur is 5;
(2) adding ethanol with concentration of at least 65% to the carbon nanotube and the sublimed sulfur from step (1), where a weight ratio of the nanotube and the sublimed sulfur to the ethanol is 2:1, then milling for at least 10 hours to obtain an intermediate mixture;
(3) drying the intermediate mixture from step (2) at 100°C under a protective gas flow of N₂ for 24 hours to form a dried intermediate mixture;
(4) first-stage burning the dried intermediate mixture from step (3) under a negative pressure condition of -0.1 atmosphere at 200°C for 5 hours to obtain a molten sulfur coated carbon nanotube material;
(5) adding the molten sulfur coated carbon nanotube material from step (4) into ethanol with concentration of 65% in which a weight ratio of the molten sulfur coated carbon nanotube material to ethanol is 2:1, and grinding by high speed grinding machine to obtain an intermediate carbon nanotube material having a particle size of 1 micron or less;
(6) drying the intermediate carbon nanotube material from step (5) at 100°C under a protective gas flow of N₂ for 24 hours to obtain a dried intermediate carbon nanotube material;
(7) second-stage burning the dried intermediate carbon nanotube material from step (6) at 300°C in flowing Argon gas environment for 5 hours to obtain a carbon nanotube-sulfur composite material; and
(8) adding rare earth yttrium oxide (10%) to the carbon nanotube-sulfur composite material from step (7), where a percentage weight of the carbon nanotube-sulfur composite material and the rare earth yttrium oxide is 9:1, then processing by jet milling and grading to obtain the nano-sulfur composite anode material which has a particle size of 1 micron or less.

### Exemplary Embodiment 2

A nano-sulfur composite anode material for rare earth lithium-sulfur battery according to the preferred embodiment of the present invention which has a composition by weight ratio of the followings:
multiwalled carbon nantube 1.5
sublimed sulfur 5
rare earth yttrium oxide 0.72

A preparation method of nano-sulfur composite anode material for rare earth lithium-sulfur battery according to the preferred embodiment of the present invention comprises the steps of:
(1) obtaining a carbon nanotube and a sublimed sulfur by weight ratio, where a weight ratio of the carbon nanotube is 1 and a weight ratio of the sublimed sulfur is 5;
(2) adding ethanol with concentration of at least 65% to the carbon nanotube and the sublimed sulfur from step (1), where a weight ratio of the nanotube and the sublimed sulfur to the ethanol is 2:1, then milling for at least 10 hours to obtain an intermediate mixture;
(3) drying the intermediate mixture from step (2) at 95°C under a protective gas flow of N₂ for 20 hours to form a dried intermediate mixture;
(4) first-stage burning the dried intermediate mixture from step (3) under a negative pressure condition of -0.2 atmosphere at 250°C for 6 hours to obtain a molten sulfur coated carbon nanotube material;
(5) adding the molten sulfur coated carbon nanotube material from step (4) into ethanol with concentration of 65% in which a weight ratio of the molten sulfur coated carbon nanotube material to ethanol is 2:1, and grinding by high speed grinding machine to obtain an intermediate carbon nanotube material having a particle size of 1 micron or less;
(6) drying the intermediate carbon nanotube material from step (5) at 95°C under a protective gas flow of N₂ for 20 hours to obtain a dried intermediate carbon nanotube material;
(7) second-stage burning the dried intermediate carbon nanotube material from step (6) at 300°C in flowing Argon gas environment for 6 hours to obtain a carbon nanotube-sulfur composite material; and
(8) adding rare earth yttrium oxide (10%) to the carbon nanotube-sulfur composite material from step (7), where a percentage weight of the carbon nanotube-sulfur composite material and the yttrium oxide is 9:1, then processing by jet milling and grading to obtain the nano-sulfur composite anode material which has a particle size of 1 micron or less.

### Exemplary Embodiment 3

A nano-sulfur composite anode material for rare earth lithium-sulfur battery according to the preferred embodiment of the present invention which has a composition by weight ratio of the followings:
multiwalled carbon nantube 2
sublimed sulfur 5
rare earth yttrium oxide 0.78

A preparation method of nano-sulfur composite anode material for rare earth lithium-sulfur battery according to the preferred embodiment of the present invention comprises the steps of:
(1) obtaining a carbon nanotube and a sublimed sulfur by weight ratio, where a weight ratio of the carbon nanotube is 2 and a weight ratio of the sublimed sulfur is 5;
(2) adding ethanol with concentration of at least 65% to the carbon nanotube and the sublimed sulfur from step (1), where a weight ratio of the nanotube and the sublimed sulfur to the ethanol is 2:1, then milling for at least 10 hours to obtain an intermediate mixture;
(3) drying the intermediate mixture from step (2) at 90°C under a protective gas flow of N₂ for 16 hours to form a dried intermediate mixture;
(4) first-stage burning the dried intermediate mixture from step (3) under a negative pressure condition of -0.5 atmosphere at 300°C for 7 hours to obtain a molten sulfur coated carbon nanotube material;
(5) adding the molten sulfur coated carbon nanotube material from step (4) into ethanol with concentration of 65% in which a weight ratio of the molten sulfur coated carbon nanotube material to ethanol is 2:1, and grinding by high speed grinding machine to obtain an intermediate carbon nanotube material having a particle size of 1 micron or less;
(6) drying the intermediate carbon nanotube material from step (5) at 90°C under a protective gas flow of N₂ for 16 hours to obtain a dried intermediate carbon nanotube material;
(7) second-stage burning the dried intermediate carbon nanotube material from step (6) at 400°C in flowing Argon gas environment for 7 hours to obtain a carbon nanotube-sulfur composite material; and
(8) adding rare earth yttrium oxide (10%) to the carbon nanotube-sulfur composite material from step (7), where a percentage weight of the carbon nanotube-sulfur composite material and the rare earth yttrium oxide is 9:1, then processing by jet milling and grading to obtain the nano-sulfur composite anode material which has a particle size of 1 micron or less.

It will thus be seen that the objects of the present invention have been fully and effectively accomplished. It embodiments have been shown and described for the purposes of illustrating the functional and structural principles of the present invention.

## Claims

1. A nano-sulfur composite anode material for rare earth lithium-sulfur battery, having a composition by weight ratio consisting of the following constituents:
1-2 carbon nanotube;
5 sublimed sulfur; and **characterized by** 0.68-0.78 rare earth yttrium oxide.

2. The nano-sulfur composite anode material for rare earth lithium-sulfur battery, as recited in claim 1, wherein said carbon nanotube is a multiwalled carbon nanotube.

3. A preparation method of nano-sulfur composite anode material for rare earth lithium-sulfur battery, comprising the steps of:
(a) obtaining a mixture of carbon nanotube and a sublimed sulfur in which a weight ratio of said carbon nanotube is 1-2 and a weight ratio of said sublimed sulfur is 5;
(b) adding ethanol with a concentration of at least 65% to the mixture of carbon nanotube and said sublimed sulfur obtained from step (a) in a weight ratio of 1:2 (ethanol:mixture), then milling for at least 10 hours;
(c) drying the mixture of carbon nanotube and sublimed sulfur obtained from step (b) at 90∼100°C under a protective gas flow of N₂ for 8-24 hours;
(d) first-stage burning of dried mixture of carbon nanotube and sublimed sulfur of step (c) under a negative pressure of -10.1325 kPa to -50.6625 kPa (-0.1 to 0.5 atmosphere) at 200-300 °C for at least 5 hours, anda molten sulfur coated carbon nanotube composite material is obtained;
(e) adding ethanol at a concentration of at least 65% into said molten sulfur coated carbon nanotube composite material in a weight ratio of 1:2, and grinding by high speed grinding machine to obtain a carbon nanotube composite material having a particle size of 1 micron or less;
(f) drying said carbon nanotube composite material obtained in step (e) at 90∼100°C under a protective gas flow of N₂ for 8-24 hours;
(g) second-stage burning of the dried carbon nanotube composite material obtained in step (f) at 300-400 °C in Argon gas environment for at least 5 hours; a carbon nanotube-sulfur composite material is obtained; and
(h) adding rare earth yttrium oxide into said carbon nanotube-sulfur composite material in a weight ratio of 1:9, then processing by jet milling and grading, and a nano-sulfur composite anode material for rare earth lithium sulphur battery which has a particle size of 1 micron or less is obtained.

## Patentansprüche

1. Nano-Schwefelverbundanodenmaterial für Seltenerden-Lithium-Schwefel-Batterie, aufweisend ein Zusammensetzungsverhältnis nach Gewicht aus den folgenden Bestandteilen:
1-2 Kohlenstoffnanoröhrchen;
5 Schwefelblüte; und
**gekennzeichnet durch** 0,68-0,78Seltenerden-Yttriumoxid.

2. Nano-Schwefelverbundanodenmaterial für Seltenerden-Lithium-Schwefel-Batterienach Anspruch 1, wobei das Kohlenstoffnanoröhrchen ein mehrwandiges Kohlenstoffnanoröhrchen ist.

3. Verfahren zum Herstellen einesNano-Schwefelverbundanodenmaterials für Seltenerden-Lithium-Schwefel-Batterie, folgende Schritte umfassend:
(a) Erlangen eines Gemischs aus Kohlenstoffnanoröhrchenund einer Schwefelblüte, wobei ein Gewichtsanteil des Kohlenstoffnanoröhrchen1-2und ein Gewichtsanteil der Schwefelblüte 5 beträgt;
(b) Zusetzen von Ethanol mit einer Konzentration von wenigstens 65% zum dem Gemisch aus Kohlenstoffnanoröhrchenund Schwefelblüte, das in Schritt (a) erlangt wurde, in einem Gewichtsverhältnis von 1:2 (Ethanol:Gemisch), dann Zermahlen für wenigstens 10 Stunden;
(c) Trocken des Gemischs aus Kohlenstoffnanoröhrchenund Schwefelblüte, das in Schritt (b) erlangt wurde, bei 90 bis 100 °C unter einem Schutzgasstrom von N₂ für 8-24 Stunden;
(d) Brennen des getrockneten Gemischs aus Kohlenstoffnanoröhrchenund Schwefelblüteaus Schritt (c) auf einer ersten Stufe unter einem negativen Druck von -10,1325 kPa bis -50,6625 kPa (-0,1 bis 0,5 atm) bei 200-300 °C für wenigstens 5 Stunden, wodurch ein geschmolzenes schwefelbeschichtetes Kohlenstoffnanoröhrchenverbundmaterial erlangt wird;
(e) Zusetzen von Ethanol mit einer Konzentration von wenigstens 65% zu demgeschmolzenen schwefelbeschichteten Kohlenstoffnanoröhrchenverbundmaterial in einem Gewichtsverhältnis von 1:2, und Zermahlen mit einer Hochgeschwindigkeitsmahlmaschie, um ein Kohlenstoffnanoröhrchenverbundmaterial mit einer Partikelgröße von 1 Mikrometer oder weniger zu erlangen;
(f) Trocknen des in Schritt (e) erlangten Kohlenstoffnanoröhrchenverbundmaterials bei 90 bis 100 °C unter einem Schutzgasstrom von N₂ für 8-24 Stunden;
(g) Brennen des getrockneten Gemischs ausKohlenstoffnanoröhrchenverbundmaterial, das in Schritt (f) erlangt wurde, bei 300-400 °Cin einer Argongasumgebung für wenigstens 5 Stunden; wodurch ein Kohlenstoffnanoröhrchen-Schwefel-Verbundmaterial erlangt wird; und
(h) Zusetzen von Seltenerden-Yttriumoxid zu demKohlenstoffnanoröhrchen-Schwefel-Verbundmaterial in einem Gewichtsverhältnis von 1:9, dann Verarbeiten durchMahlen in einer Strahlmühle und Sieben, wodurch ein Nano-Schwefelverbundanodenmaterial für Seltenerden-Lithium-Schwefel-Batterie erlangt wird, das eine Partikelgröße von 1 Mikrometer oder weniger aufweist.

## Revendications

1. Matériau d'anode composite nano-sulfurique pour une batterie au soufre-lithium deterres rares, ayant une composition, en rapport de poids, composée des constituants suivants :
1-2 nanotubesde carbone ;
5 en soufre sublimé ; et
**caractérisé par** 0,68 à 0,78oxyde d'yttrium de terres rares.

2. Matériau d'anode composite nano-sulfurique pour une batterie au soufre-lithium de terres rares selon la revendication 1, où ledit nanotube de carbone est un nanotube de carbone à parois multiples.

3. Procédé de préparation d'un matériau d'anode composite nano-sulfurique pour une batterie au soufre-lithium de terres rares, comprenant les étapes consistant à :
(a) obtenir un mélange de nanotube de carbone et de soufresublimédans lequel un rapport en poids dudit nanotube de carbone est de 1 à 2 et un rapport en poids dudit soufre subliméest de 5;
(b) ajouter de l'éthanol avec une concentration au moins égale à 65% aumélange du nanotube de carbone et dudit soufre sublimé obtenu à l'étape (a) dans un rapport de poids égal à 1 :2 (éthanol : mélange), et moudre pendant au moins 10 heures;
(c) sécher le mélange de nanotube de carbone et de soufresubliméobtenu à l'étape (b) à 90∼100°C sous un flux de gaz protecteur de N₂ pendant 8 à 24 heures;
(d) procéder à la combustion de premier stade du mélange séché du nanotube de carbone et dudit soufre sublimé obtenu à l'étape (c) sous une pressionnégativede -10,1325 kPa à -50,6625 kPa (atmosphère -0,1 à 0,5) à 200-300°C pendant au moins 5 heures et un matériau composite de nanotube de carbone revêtu de soufre fondu est obtenu ;
(e) ajouter de l'éthanolavec une concentration au moins égale à 65% dans ledit matériau composite de nanotube de carbone revêtu de soufre fondu selon un rapport de poids de 1:2, et broyer à l'aide d'un appareil de broyage rapide afin d'obtenir un matériau composite de nanotube de carbone ayant une taille de particule égale ou inférieure à 1 micron;
(f) sécher ledit matériau composite de nanotube de carbone obtenu à l'étape (e) à 90∼100°C sous un flux de gaz protecteur de N₂ pendant 8 à 24 heures;
(g) procéder à la combustion de second stade du matériau composite de nanotube de carbone séché obtenu à l'étape (f) à 300-400 °C dans un environnement au gaz d'Argon pendant au moins 5 heures ; un matériau composite de nanotube de carbone et de soufre étant obtenu; et
(h) ajouter de l'oxyde d'yttrium de terres rares dans le matériau composite de nanotube de carbone et de soufreavec un rapport de poids de 1:9, procéder ensuite au traitement par broyage au jet et calibrage et un matériau composite d'anode nano sulfurique pour une batterie au soufre-lithium de terres rares dont les tailles de particules sont égales ou inférieures à 1 micron est obtenu.
